# EUROPÄISCHE PATENTSCHRIFT

(11) **EP 1 761 719 B1**
(45) Veröffentlichungstag und Bekanntmachung des Hinweises auf die Patenterteilung: **17.11.2010**
(21) Anmeldenummer: 05763431.3
(22) Anmeldetag: 09.06.2005
(51) Int. Cl.: F16H 57/04

(54) **ÖLVERSORGUNGSEINRICHTUNG**
OIL SUPPLY DEVICE
DISPOSITIF D'ALIMENTATION EN HUILE

(30) Priorität: 30.06.2004 DE 102004031470
(43) Veröffentlichungstag der Anmeldung: 14.03.2007
(73) Patentinhaber: ZF Friedrichshafen AG, 88038 Friedrichshafen (DE)
(72) Erfinder: KLOSE, Harald, 14774 Brandenburg/Havel (DE)
(86) Internationale Anmeldenummer: PCT/EP2005/006176
(87) Internationale Veröffentlichungsnummer: WO 2006/002737

(56) Entgegenhaltungen:
- GB-A- 632 790
- US-A- 5 795 258
- PATENT ABSTRACTS OF JAPAN Bd. 1997, Nr. 07, 31. Juli 1997 (1997-07-31) -& JP 09 089004 A (NISSAN DIESEL MOTOR CO LTD), 31. März 1997 (1997-03-31)
- PATENT ABSTRACTS OF JAPAN Bd. 018, Nr. 104 (M-1563), 21. Februar 1994 (1994-02-21) -& JP 05 302659 A (KUBOTA CORP), 16. November 1993 (1993-11-16)
- PATENT ABSTRACTS OF JAPAN Bd. 2000, Nr. 21, 3. August 2001 (2001-08-03) -& JP 2001 090819 A (AISIN AI CO LTD), 3. April 2001 (2001-04-03)
- PATENT ABSTRACTS OF JAPAN Bd. 1999, Nr. 14, 22. Dezember 1999 (1999-12-22) -& JP 11 247976 A (ISUZU MOTORS LTD), 14. September 1999 (1999-09-14)
- PATENT ABSTRACTS OF JAPAN Bd. 1999, Nr. 05, 31. Mai 1999 (1999-05-31) -& JP 11 048805 A (KOYO SEIKO CO LTD), 23. Februar 1999 (1999-02-23)

## Beschreibung

Die Erfindung betrifft eine Ölversorgungseinrichtung nach der im Oberbegriff von Anspruch 1 näher definierten Art. Aus der JP9-089004A ist eine Ölversorgungseinrichtung mit den Merkmalen des Oberbegriffes des Anspruchs 1 bekannt.

In Fahrzeuggetriben, und insbesondere in Handschaltgetrieben, hat die Beölung von Verzahnungen, Lagerungen und der sich auf und in Wellen befindlichen Losradlagerungen durch die komplexe Bauweise der Fahrzeuggetriebe eine besondere Bedeutung. Einerseits muß eine ausreichende Beölung der Verzahnungen und der Lagerungen erreicht werden, andererseits soll eine möglichst kleine Ölmenge ein kleines Schleppmoment zur Erreichung einer guten Schaltbarkeit gewährleisten, was besonders bei Handschaltgetrieben einen großen Einfluß auf den Schaltkomfort hat. Ebenso sollen die Öltemperaturen moderat sein und die Ölversorgung des Rückwärtsgangrades sowie die Kaltschaltbarkeit sollen gewährleistet sein. Zur Lösung der damit zusammenhängenden Problemstellungen werden verschiedene Arten von Ölpumpen, hohlgebohrten Wellen und Ölleitungen eingesetzt oder es werden Ölleitbleche, Ölbohrungen und/oder erhöhte Ölstände im Fahrzeuggetriebe verwendet. Beim Eintauchen der Zahnräder in das Öl wird dieses willkürlich im Fahrzeuggetriebe in Abhängigkeit von Drehzahl, Gang und Fahrzustand des Fahrzeugs verteilt. Durch feststehende Ölleiteinrichtungen wird versucht, das Öl gezielt zu leiten. Bei einer Schrägverzahnung der Bauteile erfolgt eine Förderung des Öls in der Ölwanne in der durch die Schrägverzahnung vorgegebene Richtung, so dass sich eine unterschiedliche Anhäufung von Öl in der Ölwanne ergibt.

Aus der DE 32 38 790 C1 ist ein Ölschmiersystem für ein Fahrzeuggetriebe bekannt, bei dem eine Fliehkraftpumpe eingesetzt wird, welche das Öl radial nach außen durch Durchbrüche in radial gerichtete Umlenkkanäle leitet. Anschließend kann das Öl über eine Ringnut in das Innere einer hohlgebohrten Getriebewelle gelangen. Obwohl dieses System eine effekte Schmierölversorgung gewährleistet, weist es den Nachteil auf, dass die benötigte Fliehkraftpumpe einen nicht immer zur Verfügung stehenden Bauraum sowie einen hohen Abdichtungsaufwand erfordert.

Des weiteren ist aus der DE 195 01 799 C2 ein Ölschmiersystem für Fahrzeuggetriebe bekannt, umfassend eine ringförmige Kammer, der Schmieröl und Kühlöl zugeführt wird, eine rotierende Getriebewelle und ein Förderelement für das Schmier- und Kühlöl, wobei in der rotierenden Getriebewelle mindestens eine achsversetzt angeordnete Schmierölbohrung vorgesehen ist und wobei das Förderelement aus einem Fang- und Leitblech gebildet ist, das mit dem Getriebegehäuse fest verbunden ist, welche die Querschnittsfläche der Kammer im wesentlichen einnimmt und derart geformt ist, dass sich an dem Fang- und Leitblech das von der rotierenden Getriebewelle geförderte Öl unter Druckbildung staut, durch welches das Schmier- und Kühlöl in die achsversetzt angeordnete Schmierölbohrung gedrückt wird. Auch diese Lösung erfordert in nachteiliger Weise einen relativ hohen Abdichtungsaufwand, insbesondere zwischen der Getriebewelle und dem Innenraum des Getriebegehäuses.

Aus der DE 39 27 775 C2 ist eine weitere Ölzuführeinrichtung zum Zuführen von Schmier- und Kühlöl von einem Gehäuse auf eine sich drehende Welle bekannt, bei der auf der Welle zwei Dichtringe benötigt werden, die in axialem Abstand voneinander angeordnet sind, wobei zwischen den Dichtringen und zwei im Gehäuse im wesentlichen radial in axialem Abstand voneinander angeordneten Dichtflächen Dichtstellen gebildet sind. Hierbei liegen die Dichtringe unter der Vorspannung des zwischen den Dichtringen anstehenden Öldrucks an den Dichtflächen an. Hierbei ist der Abdichtungsaufwand sehr hoch, was in hohen Herstellungs- und Montagekosten resultiert.

In der DE 196 02 041 A1 ist eine Schaltgabel für ein Wechselgetriebe beschrieben, welche eine Einrichtung zum Zuleiten von Spritzöl zu der Synchronisiereinrichtung aufweist, die mit der Schaltgabel betätigt wird. Hierbei soll lediglich eine Überbelastung der Synchronisiereinrichtung dadurch vermieden werden, dass ein gerichteter Ablauf in der Einrichtung vorgesehen ist, der beim Ansynchronisieren der Synchronisiereinrichtung diese mit zusätzlichem Schmieröl versorgt. Diese Einrichtung zum Zuleiten von Spritzöl dient nicht einer besseren Beölung einer Vielzahl von Bauteilen im Fahrzeuggetriebe.

Insbesondere die Leistungssteigerung der Pkw-Motoren, die zu einer Erhöhung der Verlustleistung von Schaltgetrieben führt, was wiederum einen Anstieg der über das Gehäuse abzugebenden Wärme zur Folge hat, erfordert alternative Schmierkonzepte gegenüber derzeit üblicher Ölsumpf- bzw. Tauchschmierung bei Schaltgetrieben, Weiterhin verhindert die aerodynamische Optimierung von Fahrzeugen und die damit verbundene Kapselung der Unterbodengruppe zunehmend eine Abgabe der Wärme über das Gehäuse.

Der Erfindung liegt die Aufgabe zugrunde, eine Ölversorgungseinrichtung für ein Fahrzeuggetriebe, insbesondere bei einem Kraftfahrzeug-Handschaltgetriebe, darzustellen, um die Beölung von Bauteilen zu verbessern und eine ausreichende Beölung der Bauteile auch bei sehr hohen Drehzahlen zu gewährleisten.

Die der Erfindung zugrunde liegende Aufgabe wird durch eine, auch die kennzeichnenden Merkmale des Hauptanspruchs aufweisende, gattungsgemäße Ölversorgungseinrichtung gelöst.

Über eine axial verlaufende Zentralbohrung in einer Welle des Fahrzeuggetriebes gelangt das Öl über Querbohrungen zu einer Synchronisiereinrichtung. Durch Einbringen von Bohrungen in einen Synchronkörper der Synchronisiereinrichtung in Kombination mit einer sichelförmigen Aussparung in einem Halteblech eines Lagers der Welle kommt es bei einer Drehbewegung und in Drehrichtung strömendem Öl zu einer Verringerung des Volumens zwischen Synchronisiereinrichtung und Lager. Ein Teil-Volumenstrom des Öls wird durch Bohrungen in Welle und Synchronkörper zu den zu beölenden Bauteilen, beispielsweise Lagerstellen, geführt. Überschüssiges Öl kann als Verlust zwischen Synchronisiereinrichtung und Lager radial entweichen. Um die Verluste zu reduzieren, muss der Synchronkörper axial auf der dem Lager abgewandten Seite mit einem Blech verschlossen werden. Der Ölvorrat in der verschlossenen Welle kann zur Beölung von Lagerstellen genutzt werden. Hierzu werden zusätzliche radiale Bohrungen im Bereich der Laufflächen der Lager der Zahnräder in die Welle eingebracht. Durch diese Maßnahmen wird eine deutliche Verbesserung der Beölung der Bauteile im Fahrzeuggetriebe, auch bei sehr hohen Drehzahlen, erreicht.

Ein Ausführungsbeispiel der vorliegenden Erfindung ist in den Figuren dargestellt und wird im folgenden näher beschrieben.

Es zeigen:
- Fig. 1: einen Teil-Ausschnitt eines Getriebes mit einer erfin- dungsgemäßen Ölversorgungseinrichtung und
- Fig. 2: eine Draufsicht auf das in Fig. 1 dargestellte Fahrzeugge- triebe.

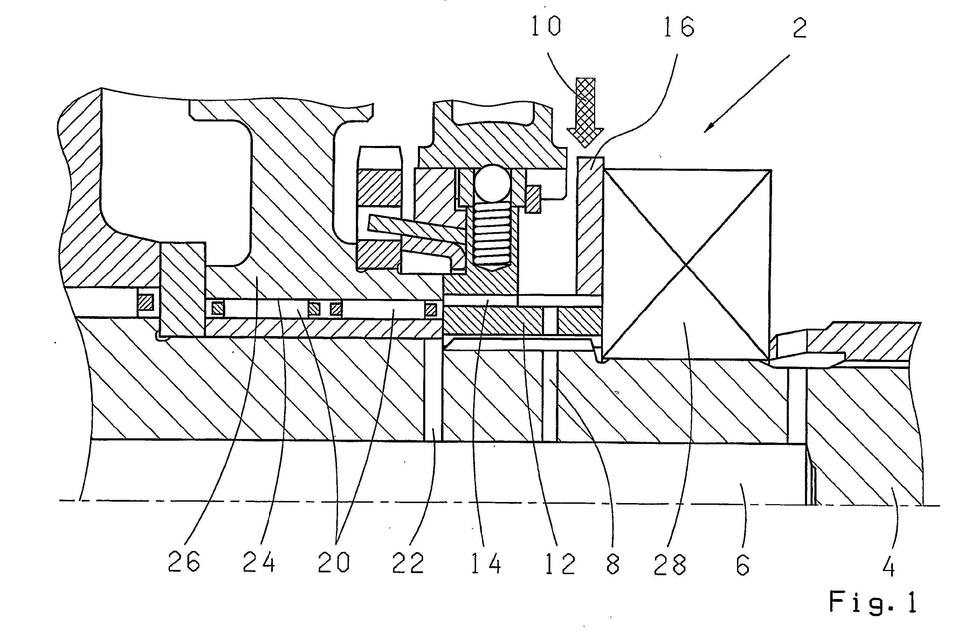

Fig. 1 zeigt einen Teil-Schnitt durch ein erfndungsgemäßes Fahrzeuggetriebe 2 mit einer Welle 4, die eine axial verlaufende Zentralbohrung 6 aufweist. Öl gelangt über Querbohrungen 8 zu einer Synchronisiereinrichtung 10. Ein Synchronkörper 12 der Synchronisiereinrichtung 10 weist eine Bohrung 14 auf, die in Verbindung mit einem Halteblech 16, welches eine sichelförmige Aussparung 18 aufweist, dafür sorgt, dass es bei einer Drehbewegung und in Drehrichtung strömendem Öl zu einer Verringerung des Volumens zwischen Synchronisiereinrichtung 10 und Lager 28 kommt. Ein Teil-Volumenstrom des Öls wird durch die Zentralbohrung 6 in der Welle 4, die Querbohrung 8 und die Bohrung 14 im Synchronkörper 12 zu den zu beölenden Bauteilen, hier beispielsweise das Lager 20, geführt. Überschüssiges Öl kann als Verlust zwischen Synchronisiereinrichtung 10 und Lager 20 radial entweichen. Über eine Querbohrung 22 wird eine Lagerlauffläche 24 des Zahnrades 26 mit zusätzlichem Öl versorgt.

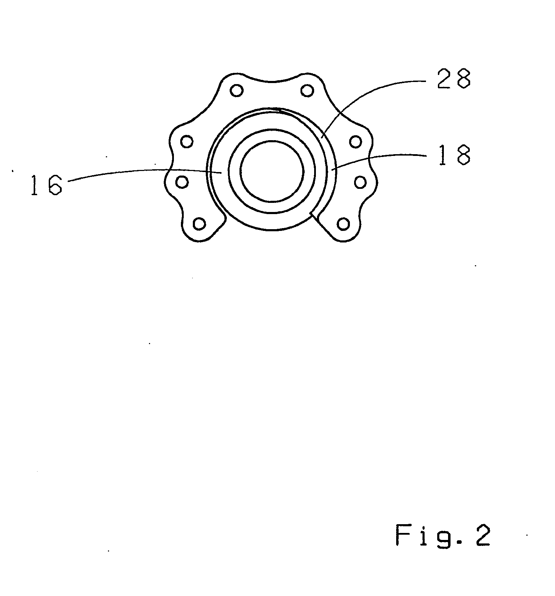

Fig. 2 zeigt ein Gehäuse mit dem im Gehäuse eingepreßten Lager 28 und einer Ausführungsform eines Halteblechs 16 mit sichelförmiger Aussparung 18.

### Bezugszeichen

- 2: Fahrzeuggetriebe
- 4: Welle
- 6: Zentralbohrung
- 8: Querbohrung
- 10: Synchronisiereinrichtung
- 12: Synchronkörper
- 14: Bohrung
- 16: Halteblech
- 18: sichelförmige Aussparung
- 20: Lager
- 22: Querbohrung
- 24: Lagerlauffläche
- 26: Zahnrad
- 28: Lager

## Patentansprüche

1. Ölversorgungseinrichtung für ein Fahrzeuggetriebe (2) mit auf Wellen angeordneten Zahnrädern, mit Lagerungen, in denen die Zahnräder und Wellen drehbar gelagert sind, und mit Synchronisiereinrichtungen (10), die durch Betätigung eines Schalthebels über Schaltstangen und Schaltgabeln in die gewünschten Schaltstellungen bewegt werden, wobei eine Welle (4) eine axial verlaufende Zentralbohrung (6) und mindestens eine Querbohrung (8) zur Ölversorgung aufweist, und ein Synchronkörper (12) der Synchronisiereinrichtung (10) Bohrungen (14) aufweist **dadurch gekennzeichnet, dass** zwischen Synchronisiereinrichtung (10) und einem Lager (28) ein Halteblech (16) angeordnet ist, welches eine sichelförmige Aussparung (18) aufweist.

2. Ölversorgungseinrichtung nach Anspruch 1, **dadurch gekennzeichnet, dass** der Synchronkörper (12) axial auf der einem Lager (20) abgewandten Seite mit einem Blech verschlossen ist.

3. Olversorgungseinrichtung nach Anspruch 1, **dadurch gekennzeichnet, dass** die Welle (4) im Bereich der Lagerlauffläche (24) des Zahnrads (26) mindestens eine Querbohrung (22) aufweist.

## Claims

1. Oil supply device for a vehicle transmission (2) having gearwheels which are arranged on shafts, having bearings, in which the gearwheels and shafts are mounted rotatably, and having synchronizing devices (10) which are moved into the desired switching positions by actuation of a switching lever via switching rods and switching forks, a shaft (4) having an axially extending central hole (6) and at least one transverse hole (8) for oil supply, and a synchronizing body (12) of the synchronizing device (10) having holes (14), **characterized in that** a holding plate (16) which has a crescent-shaped cut-out (18) is arranged between the synchronizing device (10) and a bearing (28).

2. Oil supply device according to Claim 1, **characterized in that** the synchronizing body (12) is closed axially with a metal plate on the side which faces away from a bearing (20).

3. Oil supply device according to Claim 1, **characterized in that** the shaft (4) has at least one transverse hole (22) in the region of the bearing running face (24) of the gearwheel (26).

## Revendications

1. Dispositif d'alimentation en huile pour une transmission de véhicule (2) avec des roues dentées disposées sur des arbres, avec des supports sur palier, dans lesquels les roues dentées et les arbres sont montés à rotation, et avec des dispositifs de synchronisation (10) qui sont déplacés par l'actionnement d'un levier de sélection par le biais de tiges de sélection et de fourchettes de sélection dans les positions de changements de vitesses souhaités, un arbre (4) présentant un alésage central (6) s'étendant axialement et au moins un alésage transversal (8) pour l'alimentation en huile, et un dispositif de synchronisation (12) du dispositif de synchronisation (10) présentant des alésages (14) **caractérisés en ce qu'**entre le dispositif de synchronisation (10) et un pavé (28) est disposée une tôle de retenue (16) qui présente un évidement (18) en forme de croissant.

2. Dispositif d'alimentation en huile selon la revendication 1, **caractérisé en ce que** le corps de synchronisation (12) est fermé axialement avec une tôle du côté opposé à un palier (20).

3. Dispositif d'alimentation en huile selon la revendication 1 **caractérisé en ce que** l'arbre (4) présente, dans la région de la surface de roulement du palier (24) de la roue dentée (26), au moins un alésage transversal (22).
